# EUROPEAN PATENT SPECIFICATION

(11) **EP 0 288 301 B1**
(45) Date of publication and mention of the grant of the patent: **18.08.1993**
(21) Application number: 88303649.3
(22) Date of filing: 22.04.1988
(51) Int. Cl.: B26B 21/06, B26B 21/54

(54) **A method for making a razor**
Verfahren zur Herstellung eines Nassrasierers
Procédé de fabrication d'un rasoir mécanique

(30) Priority: 24.04.1987 US 42493
(43) Date of publication of application: 26.10.1988
(73) Proprietor: WARNER-LAMBERT COMPANY, Morris Plains New Jersey 07950 (US)
(72) Inventor: Butlin, Edward C., Erie Pennsylvania 16505 (US); Conrad, William T., Jr., Shelton Connecticut 06484 (US)
(74) Representative: Coxon, Philip

(56) References cited:
- FR-A- 1 473 527
- GB-A- 1 251 905
- GB-A- 1 565 296
- GB-A- 2 050 912
- US-A- 3 738 000
- US-A- 4 489 627

## Description

This invention relates to a method for making a razor, more particularly a disposable razor.

Currently, disposable razors provide a substantial portion of the market for wet shaving.

As used herein the expression disposable razor refers equally to a razor having a razor head with an integral handle, and to a razor having a disposable razor head (i.e. a cartridge) which can be removed from the handle. In general, the razor head comprises a blade cover, a blade seat, one or more blades and a spacer between adjacent blades.

With the exception of the blade or blades (and possibly the spacer), disposable razors are made out of a thermoplastics material. The various components, depending upon the ultimate design, are moulded separately and then assembled. For example, the "MicroTrac" disposable razor manufactured by Gillette moulds a single unit blade seat, back and cap, with the cap being in the form of fingers. The blade subassembly consisting of two blades and a spacer is inserted between the moulded cap and seat with the finger-like projections extending from the top of the cap serving as leaf springs to retain the blade subassembly by a friction fit. This combination is then mated to a handle by press fitting into a tab-finger combination. It is apparent that this process involves not only separate steps but separate work stations requiring individual subassembly and ultimately assembly.

Other assembly processes for disposable razors utilize staking from projections depending either from the cap or the seat which mate with reciprocal openings in the other part and position the blades and/or spacer. The handle is usually mated separately to the seat portion. Again, separate assembly steps at different locations are required to produce the disposable razor.

Ultimately, a disposable razor which could be assembled at a single work station having all of the plastic parts produced in a single cavity would be desirable because the steps of subassembly, final assembly and the conveying of the various components from location to location around the manufacturing area could be eliminated.

GB-A-1,565,296 discloses making a unitary handle, guard member and blade support and then attaching a Z-shaped blade by upset rivets or the like.

US-A-4,489,627 describes a razor manufacturing process in which a double edge strip of blade metal is parted along a centre line and cropped to form two strips each containing a series of spaced apart blades connected by webs to an elongate backing strip. Each strip, which now consists of a plurality of blades and a backing strip, is fed into a moulding machine in which either the shaving unit, or blade containing component of a razor, is moulded directly around each individual blade. The web is then parted to release the moulded razor, etc. from the backing strip. It is not clear in this patent how the remaining razor components are manufactured. It is apparent, however, that the moulding machine completely surrounds the blade segment during moulding. This therefore requires the handling of an elongated metal strip, its control and insertion in either a multi-cavity mould or a very large single cavity mould, and the production of either a series of razors or heads joined together in a single unit which must be subsequently disassembled. Conveying of a metal web of the type described is extremely difficult when it is necessary to protect a delicate cutting edge and even more so when two cutting edges must be protected.

According to one aspect of the present invention there is provided a method for forming a disposable razor having blade support means, blade covering means and optionally handle means comprising forming a blade support to mate with a blade such that the blade support extends downward from the blade at its central back portion, characterised by:-
a) forming the blade support with a first shot injection moulding to mate with the blade which is set in a predetermined position in a mould such that the blade support terminates before the longitudinal ends of the blade; and
b) subsequently moulding the remaining parts of the razor including a cap and a guard bar around the blade support and blade within the same mould.

Preferably the blade is attached to the blade support at the time the blade support is formed.

The blade support need not cover only the one surface described above.

The blade is desirably mated to the blade support by allowing fluid thermoplastics material forming of the blade support to flow through at least one orifice of the blade to cover a portion of the opposite surface of the blade surrounding the or each orifice.

The blade support preferably comprises at least part of the handle means.

It is desirable that the entire razor is formed continuously in a single mould cavity.

The remaining parts of the razor are advantageously moulded to said subassembly in a single step.

According to a further aspect of the invention there is provided a razor subassembly comprising a razor blade and a moulded blade support said blade support being positioned centrally longitudinally along one surface of the blade characterised in that the blade support is moulded upward through and around at least one centrally positioned blade orifice, and terminates before the longitudinal ends of the blade.

The present invention resulted from the recognition of the difficulties encountered in the attempt to mould a blade containing element which completely surrounds the blade as part of a first (or only) moulding step. It is extremely difficult to maintain the blade in a specific position while one step moulding is attempted. The blade must first, be held or retained in a specific position by some means while allowing the fluid thermoplastics material to surround the parts of the blade which are ultimately covered. One means of accomplishing this is to clamp the sharpened edge of the blade but this increases the possibility of damaging the blade. Also, if the blade is to be surrounded by moulded thermoplastics material, it is difficult to support adequately the blade during the injection of fluid and deflection or deformation of this thin metal strip is highly likely.

Reference is now made to the accompanying drawings, in which:-
Figure 1 is a plan view of a blade used in a method according to the invention;
Figure 2 is a plan view of a blade subassembly according to the invention;
Figure 3 is a view along lines 3-3 of Figure 2; and
Figure 4 is a front perspective view of an assembled razor made using the method according to the invention.

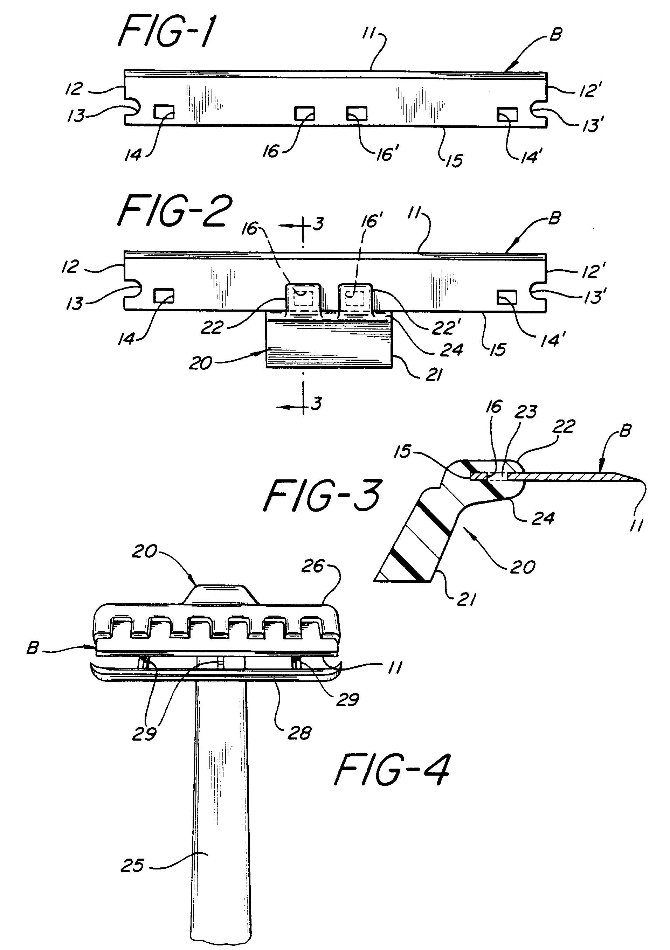

A blade B which is essentially conventional in configuration is used for the method of the present invention. As can be seen in Figure 1 the blade B has a first series of holes or orifices 14 and 14′ positioned near the back edge 15 of the blade B and near the longitudinal ends 12 and 12′ of the blade B. A second set of holes or orifices 16, 16′, of generally the same shape, are disposed near the longitudinal centre of the blade B and substantially symmetrically about either side of the middle of the blade B. In this particular blade the openings 14, 14′, 16 and 16′ are essentially equal in size and shape and are disposed essentially axially with respect to each other.

The blade B also features a cutting edge 11 positioned on the opposite side from the back edge 15. Indentations 13 and 13′ are positioned along the longitudinal edges 12 and 12′ respectively and serve to position the blade B within an injection moulding cavity. These locating indentations 13 and 13′ provide the initial orientation to the blade for the first moulding step.

A subassembly of the blade B and a thermoplastics blade support 20 is depicted in Figures 2 and 3 and is formed with a first shot injection moulding. The subassembly must have certain defined characteristics to provide the basis for subsequent moulding. The blade support 20 moulded as a single element must provide sufficient support for the blade B to prevent its undue flexing during the remainder of the process.

The locating means in the form of notches 13 and 13′ are used initially to position the blade B, and then the blade support 20 is provided; this helps to minimize the blade B flexing while the blade support 20 is formed to extend downward from the bottom of the blade B at its central back portion. The support 20, enables the successful subsequent moulding of the other razor parts.

The blade support 20 has a flange 21 extending downward from a support portion 24 upon which the blade B rests. In the particular embodiment depicted in Figures 2 and 3, the blade B is attached to the blade support 20 and held in place by tabs 22 and 22′ which are joined to the support 24 by downward projections 23; the projections 23 extend through the holes 16 and 16′.

The top of the tabs 22 and 22′ must be controlled in height so that the subsequent formation of a cap, or the addition of a second blade or spacer is not hindered by the tabs 22 and 22′. The flange 21, the tabs 22 and 22′, the projections 23 and the support portion 24 are injection moulded to form a single component which both serves to support and retain the blade B in its position on blade support 20.

It is contemplated that the downward projection 21 will, in one embodiment, form a thermoplastics handle 25 of the razor (see Figure 4). The length or other configurational features of the downwardly extending part of support 20 is not particularly critical in that it merely provides an additional basis for positioning for subsequent moulding.

After the subassembly has been formed, the remainder of the disposable razor is shaped, e.g., by injection moulding, around the blade subassembly. Blade slots 14 are used to provide locations to anchor thermoplastics blade covering means in the form of a cap 26.

As can be seen in Figure 4 the completed razor has a joindure of the handle 25 to downward depending part of the blade support 20. This is overlaid by the cap 26, and a guard bar 28 is moulded as a single element which is attached to, and forms part of, thermoplastics blade supporting means in the form of a blade seat (not shown in Figure 4) by ribs 29.

As can be seen from the above description, several variables in process are possible within the scope of the invention. First, there is nothing particular critical about the size or number of the holes used for positioning and they can in fact be of a different size and different location as long as the blade B has limited flexibility after it has been attached and the flexibility is essentially the same on both sides of the blade centre so that there is no distortion. As previously mentioned, the downward projecting flange 21 can be of a variety of shapes and can in fact provide the handle 25. Other positioning means can be utilized instead of notches 13 and 13′ if desired, and alternative means of attachment instead of, or in addition to, the orifices 14 and 14′ are possible.

Also it is possible to make a twin blade assembly by positioning either the blades or the blades and a metal spacer using positioning notches on the blade and spacer ends, or by positioning only the blades and forming a plastics spacer during the subsequent moulding step. An alternative is to mould as described above, around a previously formed and assembled composite of the two blades separated by a spacer.

## Claims

1. A method for forming a disposable razor having blade support means, blade covering means (26) and optionally handle means (25) comprising forming a blade support (20) to mate with a blade (B) such that the blade support (20) extends downward from the blade (B) at its central back portion, characterised by:-
a) forming the blade support (20) with a first shot injection moulding to mate with the blade (B) which is set in a predetermined position in a mould such that the blade support (20) terminates before the longitudinal ends (12,12') of the blade (B); and
b) subsequently moulding the remaining parts of the razor including a cap (26) and a guard bar (28) around the blade support (20) and blade (B) within the same mould.

2. A method according to Claim 1, characterised in that the blade (B) is attached to the blade support (20) at the time the blade support (20) is formed.

3. A method according to Claim 1 or 2, characterised in that the blade (B) is mated to the blade support (20) by allowing fluid thermoplastics material forming of the blade support (20) to flow through at least one orifice (14,14',16,16') of the blade (B) to cover a portion of an opposite surface of the blade (B) surrounding the or each orifice 14,14',16,16').

4. A method according to Claim 1,2 or 3, characterised in that the blade support (20) comprises at least part of the handle means (25).

5. A method according to any preceding claim, characterised in that the entire razor is formed continuously in a single mould cavity.

6. A method according to any of Claims 1 to 5, characterised in that the remaining parts of the razor are moulded to said subassembly in a single step.

7. A razor subassembly comprising a razor blade (B) and a moulded blade support (20) said blade support (20) being positioned centrally longitudinally along one surface of the blade (b) characterised in that the blade support (20) is moulded upward through and around at least one centrally positioned blade orifice (16,16'), and terminates before the longitudinal ends (12,12') of the blade (B).

8. A disposable razor manufactured by the process according to Claim 1.

## Patentansprüche

1. Verfahren zur Herstellung eines Einweg-(Naß-)-Rasierers mit einem Klingentragmittel, einem Klingenabdeckmittel (26) und ggf. einem Handgriffmittel (25), bei dem ein Klingenträger (20) zur Vereinigung mit einer Klinge (B) so (an)geformt wird, daß der Klingenträger (20) von der Klinge (B) in ihrem mittleren hinteren Bereich nach unten absteht, gekennzeichnet durch
a) Formen des Klingenträgers (20) in einem ersten Spritzgieß-Schuß zur Vereinigung mit der Klinge (B), die in eine Spritzform derart in einer vorbestimmten Stellung eingesetzt ist, daß der Klingenträger (20) vor den Längs-Enden (12, 12') der Klinge (B) endet, und
b) anschließendes Spritzformen der restlichen Teile des Rasierers, einschließlich einer Kappe (26) und einer Schutzleiste (28), um den Klingenträger (20) und die Klinge (B) herum in der gleichen Spritzform.

2. Verfahren nach Anspruch 1, dadurch gekennzeichnet, daß die Klinge (B) zum Zeitpunkt des Formens des Klingenträgers (20) am Klingenträger (20) angebracht wird.

3. Verfahren nach Anspruch 1 oder 2, dadurch gekennzeichnet, daß die Klinge (B) mit dem Klingenträger (20) durch Fließenlassen eines den Klingenträger (20) bildenden fließfähigen thermoplastischen Materials durch mindestens einen Durchbruch (14, 14', 16, 16') (in) der Klinge (B) zur Bedeckung eines Bereichs einer gegenüberliegenden Fläche der Klinge (B), den oder jeden Durchbruch (14, 14', 16, 16') umgebend, vereinigt wird.

4. Verfahren nach Anspruch 1, 2 oder 3, dadurch gekennzeichnet, daß der Klingenträger (20) mindestens ein Teil des Handgriffmittels (25) umfaßt.

5. Verfahren nach einem der vorangehenden Ansprüche, dadurch gekennzeichnet, daß der gesamte Rasierer fortlaufend in einem einzigen (Spritz-)Formraum geformt wird.

6. Verfahren nach einem der Ansprüche 1 bis 5, dadurch gekennzeichnet, daß die restlichen Teile des Rasierers in einem einzigen Schritt an der Unterbaugruppe angeformt werden.

7. Rasierer-Unterbaugruppe, umfassend eine Rasierklinge (B) und einen angeformten oder angespritzen Klingenträger (20), wobei der Klingenträger (20) mittig auf der Länge längs einer Fläche der Klinge (B) angeordnet ist, dadurch gekennzeichnet, daß der Klingenträger (20) aufwärts durch und um mindestens einen mittig angeordneten Klingendurchbruch (16, 16') herum (an)geformt oder (an)gespritzt ist und vor den Längs-Enden (12, 12') der Klinge (B) endet.

8. Einweg-Rasierer, hergestellt nach dem Verfahren gemäß Anspruch 1.

## Revendications

1. Un procédé de fabrication d'un rasoir métallique jetable comportant des moyens de support de lame, des moyens à usage unique ou de couverture de lame (26) et, le cas échéant, des moyens de manche (25) consistant à former un support de lame (20) pour coopérer avec une lame (B) de telle façon que le support de lame (20) s'étende vers le bas à partir de la lame (B) dans sa partie arrière centrale, caractérisé par les étapes consistant à:
a) former le support de lame (20) par une première opération de moulage à injection pour coopérer avec la lame (B) qui est placée dans une position prédéterminée dans un moule, de telle façon que le support de lame (20) se termine avant les extrémités longitudinales (12, 12') de la lame (B); et
b) procéder ensuite au moulage des parties restantes du rasoir comprenant un couvercle (26) et une barre de garde (28) autour du support de lame (20) et de la lame (B) à l'intérieur du même moule.

2. Un procédé selon la revendication 1, caractérisé en ce que la lame (B) est fixée au support de lame (20) au moment de la fabrication du support de lame (20).

3. Un procédé selon la revendication 1 ou 2, caractérisé en ce que la lame (B) est montée sur le support de lame (20) en permettant au matériau thermoplastique fluide formant le support de lame (20) de s'écouler à travers au moins un orifice (14, 14', 16, 16') de la lame (B) pour couvrir une partie d'une surface opposée de la lame (B) entourant le ou chacun des orifices (14, 14', 16, 16').

4. Un procédé selon la revendication 1, 2 ou 3, caractérisé en ce que le support de lame (20) comporte au moins une partie des moyens de manche (25).

5. Un procédé selon l'une quelconque des revendications précédentes, caractérisé en ce que la totalité du rasoir est fabriquée en continu dans une cavité de moulage unique.

6. Un procédé selon l'une quelconque des revendications 1 à 5, caractérisé en ce que les parties restantes du rasoir sont moulées audit sous-ensemble en une seule étape.

7. Un sous-ensemble de rasoir comprenant une lame de rasoir (B) et un support de lame moulé (20), ledit support de lame (20) étant disposé en position centrale longitudinale ou le long d'une surface de la lame (B), caractérisé en ce que le support de lame (20) est moulé vers le haut à travers et autour d'au moins un orifice de lame en position centrale (16, 16') et se termine avant les extrémités longitudinales (12, 12') de la lame (B).

8. Un rasoir jetable fabriqué par le procédé selon la revendication 1.
